# EUROPEAN PATENT APPLICATION

(11) **EP 4 671 196 A1**
(43) Date of publication of application: **31.12.2025**
(21) Application number: 24184426.5
(22) Date of filing: 25.06.2024
(51) Int. Cl.: C01B 3/04, C01B 32/40, C01B 3/16

(54) **INTEGRATED PROCESS OF AMMONIA CRACKING AND REVERSE WATER GAS SHIFT**

(71) Applicant: L'Air Liquide, société anonyme pour l'Étude et l'Exploitation des procédés Georges Claude, 75007 Paris (FR)
(72) Inventor: LUTZ, Michael, 60439 Frankfurt am Main (DE); JAROLIN, Kolja, 60439 Frankfurt (DE); COSCIA, Antonio, 60439 Frankfurt am Main (DE); GEPERT, Vanessa, 60388 Frankfurt (DE)
(74) Representative: Air Liquide

(57) **Abstract**

**Title:** Integrated process of ammonia cracking and reverse water gas shift

Process for the production of carbon monoxide, said process comprising:
• providing an ammonia stream and a carbon dioxide stream,
• performing an endothermic cracking reaction of said ammonia stream for producing a cracked gas (5) comprising hydrogen and nitrogen,
• performing a reverse water gas shift reaction with said hydrogen from the cracked gas and said carbon dioxide stream as reactants, for producing a product gas (6) comprising carbon monoxide and water.

## Description

The presently disclosed subject matter relates to a method of producing carbon monoxide while reducing the need for fossil resources.

Concerns about the environmental impact of carbon dioxide emissions have led to increased efforts to convert carbon dioxide into useful chemicals. Using carbon dioxide as a feedstock can reduce emissions and counteract the rise of carbon dioxide concentration in the atmosphere. In that context, the reverse water gas shift reaction (RWGS) will be an important process.

Carbon dioxide and hydrogen can react to form carbon monoxide and water through a reverse water gas shift reaction. The reverse water gas shift reaction can be described as CO2 + H2 ↔ CO + H2O. A hydrogen and carbon dioxide source are needed.

If fossil based processes should be avoided, electrolysis would be the obvious choice to provide the hydrogen. However, large scale electrolysis is not yet available.

Ammonia is discussed as a global hydrogen carrier. Ammonia cracking can provide hydrogen in large quantities. An advantage of that process is that there is essentially no carbon dioxide involved in ammonia cracking processes, as ammonia does not contain any carbon element. In particular no emissions of carbon dioxide occur.

On the other hand, there remains a need for a large scale process using carbon dioxide as a feedstock while reducing the need for fossil resources.

Accordingly, the invention proposes a process for the production of carbon monoxide, said process comprising :
- providing an ammonia stream and a carbon dioxide stream,
- performing an endothermic cracking reaction of said ammonia stream for producing a cracked gas comprising hydrogen and nitrogen,
- performing a reverse water gas shift reaction with said hydrogen from the cracked gas and said carbon dioxide stream as reactants, for producing a product gas comprising carbon monoxide and water.

Said cracked gas comprises hydrogen, nitrogen and optionally unconverted ammonia. Said cracked gas may as well comprise traces of water.

Said cracking reaction is typically performed catalytically.

In one embodiment, the reverse water gas shift reaction is performed with said hydrogen from the cracked gas and said carbon dioxide stream as reactants with a hydrogen to carbon ratio comprised between 0,5 and 2, preferably between 0,9 and 1,3.

In one embodiment, the step of providing an ammonia stream comprises providing liquid ammonia, in particular liquid anhydrous ammonia imported from storage, for example at a temperature of -33,3°C, and vaporizing said liquid ammonia. The step of providing an ammonia stream may comprise pumping of the ammonia stream, in particular to the appropriate pressure or temperature, and an optional preheating of said liquid ammonia prior to said evaporation. The step of providing an ammonia stream may comprise superheating said vaporized ammonia.

In one embodiment, at least the reverse water gas shift reaction is performed in at least one tubular reactor comprised in a furnace. Said furnace may be a fire heated furnace.

In one embodiment, the process comprises performing a combustion for providing a heat input to the reverse water gas shift reaction, thereby generating a combustion flue gas. Said combustion may be performed in said furnace. The process may as well comprise providing a trim-fuel for performing said combustion. The trim-fuel comprises for example ammonia from the battery limit, which has been vaporized if the ammonia at battery limit is in liquid state. Said combustion is in particular performed with combustion air as an oxidant. Said combustion air may be pre-heated up to 650°C. In one embodiment, the ratio of the trim-fuel firing duty to the overall firing duty for performing said combustion is comprised between 5 and 10%.

In one embodiment, the process comprises sending the ammonia stream and the carbon dioxide stream as feed to a conversion reactor for performing the cracking reaction and the reverse water gas shift reaction in said conversion reactor. The cracking reaction and the reverse water gas shift reaction may advantageously be performed in the same conversion reactor, in particular in the same tubular reactor comprised in said furnace.

In one embodiment, said conversion reactor comprises a catalyst bed. Said catalyst bed may comprise a first catalyst layer configured to perform the cracking reaction and a second catalyst layer arranged downstream the first catalyst layer, said second catalyst layer being configured to perform the reverse water gas shift reaction. The catalyst bed may comprise a first component catalytically active for the cracking reaction and a second component catalytically active for the reverse water gas shift reaction. In one embodiment, the first component is comprised in said first catalyst layer and the second component is comprised in said second catalyst layer. Alternatively, the first component and the second component are blended together in said catalyst bed. In a further alternative, the catalyst bed comprises the same component catalytically active for both cracking and reverse water gas shift reactions.

In one embodiment, the process comprises sending the cracked gas and the carbon dioxide stream as feed to a reverse water gas shift reactor for performing the reverse water gas shift reaction in said reverse water gas shift reactor or sending a gas derived from the cracked gas and the carbon dioxide stream as feed to a reverse water gas shift reactor for performing the reverse water gas shift reaction in said reverse water gas shift reactor. The reverse water gas shift reactor may be a tubular reactor arranged in said furnace. The reverse water gas shift reactor typically comprises a catalyst configured to promote the reverse water gas shift reaction.

In one embodiment, said carbon dioxide stream is provided by capture from biomass gasification, capture from combustion, by direct air capture, in particular using waste heat from the process, by anaerobic digestion, provided from an external carbon dioxide source, or a combination of these.

In one embodiment, the process comprises removing unconverted ammonia from said cracked gas, in particular by water scrubbing, thereby obtaining an unconverted ammonia depleted gas. In particular, removing unconverted ammonia by water scrubbing produces a liquid bottom stream comprising the removed unconverted ammonia and the process comprises recovering the removed unconverted ammonia by stripping of said liquid bottom stream. The thus recovered unconverted ammonia may be sent as fuel to said combustion or recycled as at least part of said ammonia stream.

In one embodiment, the process comprises a hydrogen recovery step comprising recovering hydrogen from the cracked gas or from the unconverted ammonia depleted gas, for producing a hydrogen cracking product enriched in hydrogen and an off gas. Said hydrogen cracking product comprises for example more than 95 mol% hydrogen, in particular more than 97 mol% hydrogen, in particular more than 99 mol% hydrogen. Said off gas may comprise nitrogen, hydrogen and optionally unconverted ammonia. Said off gas may in particular comprise nitrogen, hydrogen, unconverted ammonia and water. The process may comprise sending the off gas as a fuel to said combustion. The hydrogen recovery step is in particular performed by pressure swing adsorption.

The process may comprise cooling the cracked gas prior to said step of removing unconverted ammonia or prior to said hydrogen recovery step. The cracked gas or the unconverted ammonia depleted gas are in particular cooled to a temperature comprised between 0 and 50°C.

In one embodiment, a gas derived from the cracked gas includes said unconverted ammonia depleted gas or said hydrogen cracking product.

In one embodiment, the process comprises mixing the carbon dioxide stream with said cracked gas for obtaining a mixed gas and sending the mixed gas as feed to the reverse water gas shift reactor to perform said reverse water gas shift reaction in said reverse water gas shift reactor or mixing the carbon dioxide stream with a gas derived from the cracked gas for obtaining a mixed gas and sending the mixed gas as feed to the reverse water gas shift reactor to perform said reverse water gas shift reaction in said reverse water gas shift reactor. In particular, the process comprises mixing the carbon dioxide stream with said cracked gas, with said unconverted ammonia depleted gas or with said hydrogen cracking product, for obtaining said mixed gas. In particular, the carbon dioxide content in said mixed gas is comprised between 15 and 70 mol%.

The pressure of the mixed gas may be reduced prior to sending said mixed gas to the reverse water gas shift reactor. For example, the pressure of the mixed gas after said pressure reduction is comprised between 15 and 40 bara. Alternatively, the pressure of the cracked gas or of a gas derived from the cracked gas may be reduced prior to said mixing of the carbon dioxide stream with said cracked gas or with said gas derived from the cracked gas. It may be advantageous to adjust the pressure in the reverse water gas shift reactor to a pressure more suited for the reverse water gas shift reaction.

The mixed gas may be preheated prior to sending said mixed gas to the reverse water gas shift reactor. The mixed gas is for example preheated at a temperature comprised between 300 and 900°C, preferably between 500 and 800 °C. This allows to decrease the heat load on the reverse water gas shift reactor to perform said reverse water gas shift reaction.

In one embodiment, said cooling of the cracked gas is performed by heat exchange with the ammonia stream. The cracked gas may in particular be used as a heat exchange medium for said preheating and/or vaporizing of the ammonia stream and/or for said superheating of the vaporized ammonia.

In one embodiment, said cooling of the cracked gas is performed by heat exchange with the mixed gas, thereby performing said preheating of the mixed gas.

In one embodiment, the process comprises performing the cracking reaction by recovering waste heat from the combustion flue gas. The process may comprise discharging the combustion flue gas, in particular discharging the combustion flue gas from said furnace, for example through a flue gas tunnel and performing the cracking reaction by recovering waste heat from the discharged combustion flue gas.

In one embodiment, the cracking reaction is performed in a heat exchange reactor arranged to recover waste heat from the combustion flue gas. The heat exchange reactor may be arranged in said flue gas tunnel to recover waste heat from the combustion flue gas. The heat exchange reactor may comprise one or more tubes filled with said cracking catalyst. For example, said one or more tubes may be extending in said flue gas tunnel. Said one or more tubes may have a straight shape or a coiled shape.

In one embodiment, the cracking reaction is performed in an adiabatic reactor. The heat for the cracking reaction may in that embodiment be provided by the superheating of the vaporized ammonia. The superheating of the vaporized ammonia is in particular performed by recovering waste heat from the combustion flue gas.

In one embodiment, the product gas comprises side products and unconverted reactant of said cracking reaction and reverse water gas shift reaction.

Said product gas comprises carbon monoxide, water and optionally unconverted hydrogen and unconverted carbon dioxide. In one embodiment, said product gas comprises carbon monoxide, water, unconverted hydrogen, unconverted carbon dioxide and methane. In one embodiment, the product gas comprises as well nitrogen and optionally unconverted ammonia from said cracking reaction.

The product gas may be produced, in particular at the outlet of said reverse water gas shift reactor, at a temperature comprised between 600 and 1400 °C, in particular comprised between 600 and 1000°C.

In one embodiment, the process comprises a purification step comprising recovering carbon monoxide from said product gas for producing a carbon monoxide product.

Said purification step may comprise separating the unconverted carbon dioxide from the product gas, for example by amine wash, thereby obtaining a carbon dioxide depleted product gas. The separated carbon dioxide may be recycled as at least part of said carbon dioxide stream.

Said purification step may comprise separating water from said carbon dioxide depleted product gas by adsorption, in particular by temperature swing adsorption, thereby obtaining a water depleted product gas. The separated water may be released to the environment.

Said purification step may comprise recovering carbon monoxide from said water depleted product gas via a cold box, thereby producing said carbon monoxide product and tail gasses comprising unconverted hydrogen and methane. The tail gasses may be sent as fuel to said combustion. Hydrogen from the tail gasses may also be recycled as reactant to the reverse water gas shift reaction.

The process may comprise cooling said product gas prior to the purification step.

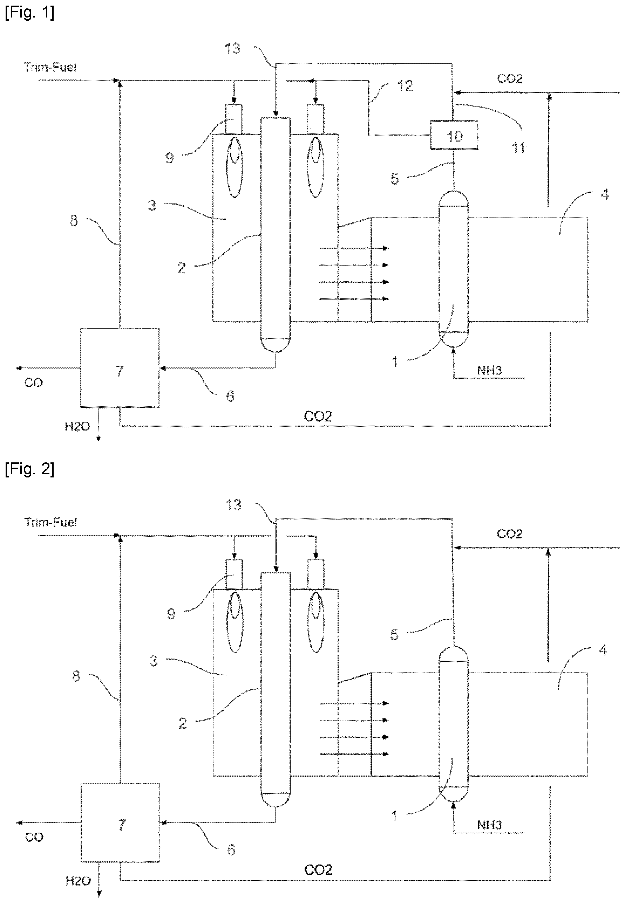

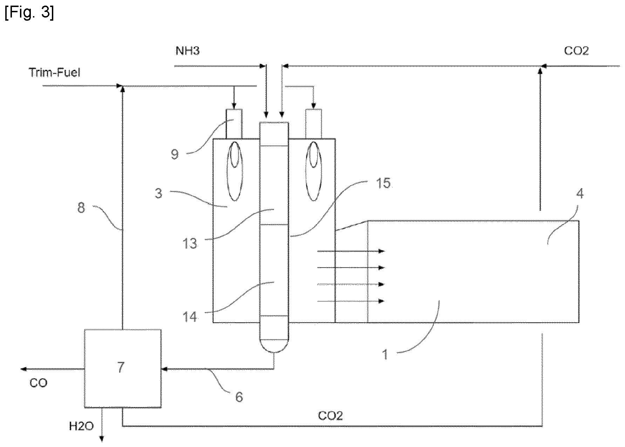

Other features, details and advantages of the invention will become clearer on reading the detailed description set out below, together with several embodiments provided purely as examples and by way of indication, with reference to the attached schematic drawing, in which
Figure 1 represents a first embodiment of the process according to the invention, Figure 2 represents a second embodiment of the process according to the invention, Figure 3 represents a third embodiment of the process according to the invention.

In figure 1, an installation for the production of carbon monoxide according to the invention is represented. A tubular reverse water gas shift reactor 2 filled with a catalyst is comprised in a furnace 3. This representation is purely schematic and a plurality of catalyst filled tubular reactors may be comprised in the furnace 3. A burner system 9 is arranged to perform a combustion in the furnace 3 to provide a heat input to the reverse water gas shift reactor 2. A flue gas tunnel 4 is arranged to discharge the generated flue gas from the furnace 3. A heat exchange reactor 1 is arranged in the flue gas tunnel 4 to recover waste heat from the flue gas as a heat input to the reaction in said reactor 1.

A vaporized ammonia stream (NH3) is provided and sent to the heat exchange reactor 1 arranged in the flue gas tunnel 4. An ammonia cracking reaction is performed in the heat exchange reactor 1 by recovering waste heat from the flue gas. The resulting cracked gas 5 comprises hydrogen, nitrogen and unconverted ammonia and optionally traces of water.

In a non-represented variant, the cracked gas may be sent to a wash column for removing said unconverted ammonia. This is for example done in case the unconverted ammonia content of the cracked gas is above 1 mol%. The removed unconverted ammonia may be recovered in a stripping column.

After cooling (not shown), the cracked gas 5 is sent to a pressure swing adsorption unit 10 for recovering a hydrogen cracking product 11 enriched in hydrogen and an off gas 12. Said off gas 12 may comprise nitrogen, hydrogen that could not be recovered as part of the hydrogen cracking product (typically between 14 and 17% of the hydrogen in the cracked gas) and optionally unconverted ammonia. The off gas 12 is sent as a fuel to the burner system 9 for said combustion.

A carbon dioxide stream (CO2) is provided and mixed to the hydrogen cracking product 11, resulting in a mixed gas 13. The mixed gas 13 is sent to the reverse water gas shift reactor 2. In the reverse water gas shift reactor 2, the hydrogen from the hydrogen cracking product 11 reacts with the provided carbon dioxide to produce a product gas comprising mainly carbon monoxide and water. Methane production may occur as an unwanted side reaction. The product gas undergoes a purification 7. Carbon monoxide is recovered as a product (CO). The water in the product gas (H2O) may be released to the environment. There may be as well unconverted hydrogen and unconverted carbon dioxide. Tail gasses 8 comprising unconverted hydrogen and undesired methane separated from the carbon monoxide are sent as a fuel to the burner system 9 for said combustion.

A trim fuel is provided to compensate for fluctuations in the provided off gas 12 or tail gasses 8 to the burner system 9.

Performing the cracking reaction and the reverse water gas shift reaction in separate reactors may be advantageous for operating these reactions at independent temperature and pressure levels. The reverse water gas shift reaction may be performed with a higher duty than the cracking reaction. Still, as ammonia cracking is a high temperature process, an advantageous heat integration with the reverse water gas shift reaction becomes possible.

The hydrogen recovery allows to separate nitrogen and where necessary the unconverted ammonia and traces of water from said cracked gas. This allows to reduce the mass flow rate through the reverse water gas shift reactor 2 and facilitates a downstream purification of the product gas.

The embodiment of figure 2 differs from the figure 1 embodiment in that the hydrogen from the cracked gas 5 is not recovered. The carbon dioxide stream (CO2) is instead mixed directly to the cracked gas 5 and the resulting mixed gas comprising hydrogen, nitrogen, unconverted ammonia and carbon dioxide is sent to the reverse water gas shift reactor 2 where the reverse water gas shift reaction is performed.

Implementing the process according to the invention in separate reactors, without removing unconverted ammonia from said cracked gas and without a hydrogen recovery, eliminates the need for a cooling of the cracked gas. The cracked gas waste heat may then be directly valorized in the reverse water gas shift reactor while performing the reverse water gas shift reaction.

In the embodiment of figure 3, the cracking reaction and the reverse water gas shift reaction are performed in the same tubular conversion reactor 15 of the furnace 3. This is a purely schematic representation and both reactions may be performed in any one of the other catalyst filled tubular reactors of the furnace 3, provided that both reactions are occurring in each of the tubular reactors. The ammonia stream (NH3) and carbon dioxide stream (CO2) are thus both sent directly to the conversion reactor 15. The resulting mix is passed through a first catalyst layer 13 promoting predominantly the ammonia cracking reaction. The resulting cracked gas mixed with carbon dioxide is passed through a second catalyst layer 14 promoting predominantly the reverse water gas shift reaction of the hydrogen of the cracked gas with said carbon dioxide to produce water and carbon monoxide.

Performing both cracking and reverse water gas shift reactions in the same reactor results in a direct contact of the gasses involved in these reactions together. It allows one reaction to run by recovering waste heat directly from the other one. In particular, waste heat from the cracked gas may be directly valorized while performing the reverse water gas shift reaction. It allows the same heat input for both reactions. An optimum heat integration may thus be achieved.

## Claims

1. Process for the production of carbon monoxide, said process comprising :
• providing an ammonia stream and a carbon dioxide stream,
• performing an endothermic cracking reaction of said ammonia stream for producing a cracked gas (5) comprising hydrogen and nitrogen,
• performing a reverse water gas shift reaction with said hydrogen from the cracked gas and said carbon dioxide stream as reactants, for producing a product gas (6) comprising carbon monoxide and water.

2. Process according to the preceding claim, comprising performing a combustion for providing a heat input to the reverse water gas shift reaction, thereby generating a combustion flue gas.

3. Process according to one of the preceding claims, comprising sending the ammonia stream and the carbon dioxide stream as feed to a conversion reactor (15) for performing the cracking reaction and the reverse water gas shift reaction in said conversion reactor (15).

4. Process according to the preceding claim, wherein said conversion reactor (15) comprises a catalyst bed, said catalyst bed comprising a first catalyst layer (13) configured to perform the cracking reaction and a second catalyst layer (14) arranged downstream the first catalyst layer, said second catalyst layer (14) being configured to perform the reverse water gas shift reaction.

5. Process according to claim 1 or claim 2, comprising sending the cracked gas (5) or a gas derived therefrom and the carbon dioxide stream as feed to a reverse water gas shift reactor (2) for performing the reverse water gas shift reaction in said reverse water gas shift reactor (2).

6. Process according to the preceding claim, comprising removing unconverted ammonia from the cracked gas (5), in particular by water scrubbing, thereby obtaining an unconverted ammonia depleted gas.

7. Process according to claim 5 or claim 6, comprising a hydrogen recovery step comprising recovering hydrogen from the cracked gas or from the unconverted ammonia depleted gas, for producing a hydrogen cracking product (11) enriched in hydrogen and an off gas (12).

8. Process according to claim 6 or claim 7, comprising cooling the cracked gas prior to said step of removing unconverted ammonia or prior to said hydrogen recovery step.

9. Process according to one of claims 5 to 8, comprising mixing the carbon dioxide stream with said cracked gas or with a gas derived from the cracked gas (5), for obtaining a mixed gas (13) and sending the mixed gas (13) as feed to the reverse water gas shift reactor (2) to perform said reverse water gas shift reaction in said reverse water gas shift reactor (2).

10. Process according to the preceding claim, comprising reducing the pressure of the mixed gas (13) prior to sending said mixed gas (13) to the reverse water gas shift reactor (2).

11. Process according to claim 9, comprising reducing the pressure of the cracked gas (5) or of a gas derived therefrom, prior to said mixing of the carbon dioxide stream with said cracked gas (5) or with said gas derived from the cracked gas (5).

12. Process according to claim 8 in combination with one of claims 9 to 11, wherein the mixed gas (13) is preheated prior to being sent to the reverse water gas shift reactor (2) and said cooling of the cracked gas (5) is performed by heat exchange with the mixed gas (13), thereby performing said preheating of the mixed gas (13).

13. Process according to claim 2 and one of claims 5 to 12, comprising performing the cracking reaction by recovering waste heat from the combustion flue gas.

14. Process according to the preceding claim, wherein the cracking reaction is performed in a heat exchange reactor (1) arranged to recover waste heat from the combustion flue gas.

15. Process according to one of the preceding claims, comprising a purification step, said purification step comprising recovering carbon monoxide from said product gas for producing a carbon monoxide product.
